# EUROPÄISCHE PATENTANMELDUNG

(11) **EP 3 308 992 A1**
(43) Veröffentlichungstag der Anmeldung: **18.04.2018**
(21) Anmeldenummer: 17196168.3
(22) Anmeldetag: 12.10.2017
(51) Int. Cl.: B60K 17/28, F16H 61/02, F16H 37/04

(54) **ZAPFWELLENGETRIEBE**

(30) Priorität: 14.10.2016 DE 102016220130
(71) Anmelder: Deere & Company, Moline, IL 61265 (US)
(72) Erfinder: Müller, David, 68163 Mannheim (DE); Gugel, Rainer, 68163 Mannheim (DE)
(74) Vertreter: Reichert, Christian

(57) **Zusammenfassung**

Die Erfindung betrifft ein Zapfwellengetriebe (20) und ein Verfahren, das eine Zapfwellensteuerung, eine Eingangswelle (22), eine erste Ausgangswelle (24), eine parallel angeordnete Zwischenwelle (26), und eine zweite Ausgangswelle (28) aufweist, die koaxial zur ersten Ausgangswelle (24) angeordnet ist.

## Beschreibung

Die vorliegende Erfindung betrifft eine Getriebe für eine Leistungsabgabewelle an landwirtschaftlichen Nutzfahrzeugen und ein Verfahren zur Steuerung desselben.

Üblicherweise sind Leistungsabgabewellen am vorderen und hinteren Ende von landwirtschaftlichen Fahrzeugen vorgesehen. Mit der Leistungsabgabewelle, auch Zapfwelle genannt, werden angehängte Aggregate mit Leistung versorgt, die bei Feldarbeiten verwendet werden.

Die Aggregate können unterschiedliche Antriebsmomente und -drehzahlen erfordern. Aus diesem Grund sind Zapfwellengetriebe bekannt, die unterschiedliche Drehzahlen bereitstellen. Die bekannten Zapfwellengetriebe ermöglichen ein Umschalten der Betriebsarten der Zapfwelle im lastfreien Zustand.

Die üblichen Drehzahlen der Zapfwellen sind 540 und 1000 Umdrehungen pro Minute. Es sind neben diesen auch Gänge üblich, welche die gleiche Drehzahl aufweisen, jedoch mit einer geringen Antriebsleistung des landwirtschaftlichen Fahrzeugs betrieben werden können. Dies ermöglicht die Einsparung von Kraftstoff bzw. Antriebsenergie.

DE 10 2011 084 623 A1 zeigt ein Zapfwellengetriebe mit lastfrei schaltbarem Zapfwellengetriebe.

Die vorliegende Erfindung weist nach Anspruch 1 ein Zapfwellengetriebe auf, mit einer Zapfwellensteuerung, einer Eingangswelle, einer ersten Ausgangswelle, einer parallel angeordneten Zwischenwelle, einer zweiten Ausgangswelle, die koaxial zur ersten Ausgangswelle angeordnet ist, vier Zahnradpaaren, die derart angeordnet sind, dass die Eingangswelle zwei Zahnräder, die erste Ausgangswelle drei Zahnräder, die Zwischenwelle zwei Zahnräder und die zweite Ausgangswelle ein Zahnrad aufweist, so dass zwei Zahnradpaare zwischen der Eingangswelle und der ersten Ausgangswelle, ein Zahnradpaar zwischen der ersten Ausgangswelle und der Zwischenwelle und ein Zahnradpaar zwischen der Zwischenwelle und der zweiten Ausgangswelle im Eingriff sind, wobei wenigstens ein Zahnrad je Zahnradpaar schaltbar ist.

Das Zapfwellengetriebe stellt vier Gänge bereit, die unterschiedliche Drehzahlen und/oder unterschiedliche Leistungen für die Zapfwelle im Betrieb ermöglichen. Es wird ein kompaktes Zapfwellengetriebe zur Verfügung gestellt. Mit der Schaltbarkeit der Zahnräder kann eine angepasste Schaltstrategie realisiert werden, wobei durch die schaltbaren Zahnräder die Zahnräder wahlweise einen Freilauf aufweisen, oder mit der jeweiligen Welle verbunden sind. In neutraler Stellung laufen die Zahnräder somit frei und übertragen keine Leistung.

Zwischen den Wellen kann durch die schaltbaren Zahnräder eine Verbindung hergestellt werden.

Zur Schaltung der Zahnräder kommen unter anderem Lamellenkupplungen oder Klauenkupplungen in Frage. Lamellenkupplungen erlauben den Schaltvorgang unter anliegender Last, so dass Stöße in Leistungspfad vermieden werden. Klauenkupplungen erfordern das Entlasten des Leistungspfads zum Schalten, ermöglichen jedoch eine Konstruktion bei kleinerem Bauraum als eine Lamellenkupplung.

Nach einer weiteren Ausführung kann die Eingangswelle wenigstens ein Schaltelement aufweisen, und die erste Ausgangswelle höchstens zwei Schaltelemente aufweisen, mit denen die Zahnräder schaltbar sind.

Die Anordnung der Schaltelemente ermöglicht es, die Zahnräder drehfest mit ihrer jeweiligen Welle zu verbinden oder diese im Freilauf zu betreiben. Bei einer Anordnung, die zwei Zahnräder mit einem Schaltelement bedient, kann eine kompakte Bauweise realisiert werden. Es ist möglich, beide Zahnradpaare auf der Eingangswelle durch ein Schaltelement zu schalten, wie auch auf der ersten Ausgangswelle. Die Zwischenwelle kann dabei kein Schaltelement aufweisen und kann mit einem geringeren Bauraum realisiert werden.

In einer weiteren Ausbildung kann durch das wenigstens eine Schaltelement auf der Eingangswelle die Eingangswelle mit der ersten Ausgangswelle verbindbar sein, und durch die höchstens zwei Schaltelemente der ersten Ausgangswelle die erste Ausgangswelle mit der Eingangswelle und mit der zweiten Ausgangswelle verbindbar sein, oder die Eingangswelle mit der ersten Ausgangswelle, der Zwischenwelle und der zweiten Ausgangswelle verbindbar sein.

Die Versorgung der Zapfwelle mit Antriebsenergie findet über die zweite Ausgangswelle statt. Mit Hilfe der Schaltelemente kann zwischen den zwei Zahnradpaaren der Eingangswelle geschaltet werden und zwischen dem Leistungspfad, der direkt von der ersten zur zweiten Ausgangswelle führt, oder von der ersten Ausgangswelle über die Zwischenwelle zur zweiten Ausgangswelle. Mit dieser Strategie können vier unterschiedliche Leistungspfade bereitgestellt werden.

Eine weitere Ausführung betrifft ein Zapfwellengetriebe mit einer Zapfwellensteuerung, einer ersten Eingangswelle, einer zweiten Eingangswelle, einer ersten Ausgangswelle, einer parallel angeordneten Zwischenwelle, einer zweiten Ausgangswelle, die koaxial zur ersten Ausgangswelle angeordnet ist, vier Zahnradpaaren, die derart angeordnet sind, dass die zweite Eingangswelle zwei Zahnräder, die erste Ausgangswelle drei Zahnräder, die Zwischenwelle zwei Zahnräder und die zweite Ausgangswelle ein Zahnrad aufweist, so dass zwei Zahnradpaare zwischen der zweiten Eingangswelle und der ersten Ausgangswelle, ein Zahnradpaar zwischen der ersten Ausgangswelle und der Zwischenwelle und ein Zahnradpaar zwischen der Zwischenwelle und der zweiten Ausgangswelle im Eingriff sind, wobei wenigstens ein Zahnrad je Zahnradpaar schaltbar ist.

Die Ausführung ermöglicht es, vier Gänge bereitzustellen, die unterschiedliche Drehzahlen und/oder unterschiedliche Leistungen für die Zapfwelle erlauben. Es wird ein kompaktes Zapfwellengetriebe zur Verfügung gestellt. Mit der Schaltbarkeit der Zahnräder kann eine angepasste Schaltstrategie realisiert werden, wobei durch die schaltbaren Zahnräder die Zahnräder wahlweise einen Freilauf aufweisen, oder mit der jeweiligen Welle verbunden sind. In neutraler Stellung laufen die Zahnräder somit frei und übertragen keine Leistung. Zwischen den Wellen kann durch die schaltbaren Zahnräder eine Verbindung hergestellt werden. Die erste Eingangswelle kann von der zweiten Eingangswelle entkoppelt werden, so dass eine Abschaltung der Zapfwelle ermöglicht ist.

In einer Ausbildung kann die zweite Eingangswelle wenigstens ein Schaltelement aufweisen, und die erste Ausgangswelle höchstens zwei Schaltelemente, mit denen die Zahnräder schaltbar sind.

Die Anordnung der Schaltelemente ermöglicht es, die Zahnräder drehfest mit ihrer jeweiligen Welle zu verbinden oder diese im Freilauf zu betreiben. Bei einer Anordnung, die zwei Zahnräder mit einem Schaltelement bedient, kann eine kompakte Bauweise realisiert werden. Es ist möglich, beide Zahnradpaare auf der zweiten Eingangswelle durch ein Schaltelement zu schalten, wie auch auf der ersten Ausgangswelle. Die Zwischenwelle kann dabei kein Schaltelement aufweisen und kann mit einem geringeren Bauraum realisiert werden.

Bei einer Ausführung kann durch das wenigstens eine Schaltelement auf der zweiten Eingangswelle die zweite Eingangswelle mit der ersten Ausgangswelle verbindbar sein, und durch die höchstens zwei Schaltelemente der ersten Ausgangswelle die erste Ausgangswelle mit der zweiten Eingangswelle und mit der zweiten Ausgangswelle verbindbar sein, oder die zweite Eingangswelle mit der ersten Ausgangswelle, der Zwischenwelle und der zweiten Ausgangswelle verbindbar sein.

Die Versorgung der Zapfwelle findet über die zweite Ausgangswelle statt. Mit Hilfe der Schaltelemente kann zwischen den zwei Zahnradpaaren der zweiten Eingangswelle geschaltet werden und zwischen dem Leistungspfad, der direkt von der ersten zur zweiten Ausgangswelle führt, oder von der ersten Ausgangswelle über die Zwischenwelle zur zweiten Ausgangswelle. Mit dieser Strategie können vier unterschiedliche Leistungspfade bereitgestellt werden.

In einer weiteren Ausbildung können die Schaltelemente unter Last schaltbar oder lastfrei schaltbar ausgeführt sein.

Mit Hilfe von Schaltelementen, die unter Last schaltbar sind, etwa eine Lamellenkupplung, kann während dem Betrieb der Zapfwelle ohne Entlastung des Antriebsstrangs eine Anpassung des Zapfwellengetriebes und generell des Betriebs der Zapfwelle vorgenommen werden. Dies führt zu einer höheren Qualität bei der Bedienbarkeit der Zapfwelle und bei der Anpassung der Fahrzeugparameter. Fahrzeugparameter können die Antriebsdrehzahl des landwirtschaftlichen Fahrzeugs sein, oder auch die Gangauswahl eines zusätzlich bei landwirtschaftlichen Fahrzeugen üblicherweise vorgesehenen automatisierten Fahrgetriebes.

Bei einer weiteren Ausführung kann wenigstens eines der Schaltelemente auf der zweiten Ausgangswelle eine Neutralstellung aufweisen.

Die Neutralstellung des Schaltelements ermöglicht ein Abschalten des Betriebs der Zapfwelle. In der Neutralstellung wird das zugehörige Zahnrad nicht mit der Welle verbunden und befindet sich im Freilauf. Dies kann dazu verwendet werden, das Zahnrad aktiv zu bremsen, etwa durch ein Bremsmittel. Die Bremsung kann notwendig sein, da durch das Schaltelement, etwa eine Lamellenkupplung, ein Schleppmoment durch Reibung des verwendeten Hydrauliköls erzeugt werden kann, welches auch in Neutralstellung des Schaltelementes zur Drehung der Zapfwelle führen kann.

Eine weitere Ausbildung der Erfindung betrifft ein Verfahren zum Schalten eines Zapfwellengetriebes, das ein Zapfwellengetriebe nach einem der vorangehenden Ansprüche, eine Fahrzeugsteuerung zur Steuerung eines automatisierten Fahrgetriebes, eines Fahrzeugantriebs und eines Zapfwellengetriebes aufweist, wobei der Fahrzeugsteuerung eine momentane Antriebsleistung vorliegt, die mit einer zu einem Zapfwellengetriebegang zum Betrieb mit reduzierter Antriebsdrehzahl gehörenden maximalen Antriebsleistung verglichen wird, und bei einem Überschreiten der maximalen Antriebsleistung einen Gangwechsel des Zapfwellengetriebes und eine Übersetzungsanpassung des Fahrgetriebes dahingehend vornimmt, dass die Antriebsdrehzahl zu einem Betriebspunkt höherer Leistungsverfügbarkeit verstellt wird.

Das Fahrzeug und das Zapfwellengetriebe werden durch die Fahrzeugsteuerung, wenn möglich, im reduzierten Leistungsmodus betrieben. Im Bedarfsfall erfolgt die Umschaltung in einen sogenannten normalen Modus, welcher die volle Leistungserbringung ermöglicht, jedoch auch einen höheren Energiebedarf für den Fahrantrieb mit sich bringt.

Im Bedarfsfall wird durch die Fahrzeugsteuerung die Leistung für die Zapfwelle auf ein höheres Niveau angehoben und erlaubt den adaptiven Betrieb der Zapfwelle an wechselnde Fahrzeuganforderungen.

Das Verfahren ermöglicht eine automatisierte und ohne Zugkraftunterbrechung der Zapfwelle ablaufende Schaltung des Leistungspfades des Zapfwellengetriebes.

Bei einer weiteren Ausführung kann der Fahrzeugsteuerung eine momentane Antriebsleistung vorliegen, die mit einer zu einem Zapfwellengetriebegang zum Betrieb mit reduzierter Antriebsdrehzahl gehörenden maximalen Antriebsleistung verglichen wird, und bei einem Unterschreiten der maximalen Antriebsleistung einen Gangwechsel des Zapfwellengetriebes und eine Übersetzungsanpassung des Fahrgetriebes dahingehend vornimmt, dass die Antriebsdrehzahl zu einem Betriebspunkt niedriger Leistungsverfügbarkeit verstellt wird.

Das Verfahren senkt die zur Verfügung stehende Leistung für die Zapfwelle damit automatisiert wieder auf das reduzierte Leistungsniveau herab, wenn die Leistungsanforderungen an die Zapfwelle sinken. Es wird die Einsparung von Antriebsenergie sichergestellt, gleichzeitig kann der Verschleiß reduziert werden und eine zu hohe Antriebslast auf das Zapfwellengetriebe wird vermieden.

In einer weiteren Ausbildung kann die Fahrzeugsteuerung die Betriebskonfiguration bestehend aus Fahrgetriebeübersetzung, Zapfwellengetriebegang und Antriebsdrehzahl bestehen lassen, wenn die neu ermittelte Betriebskonfiguration der aktuellen entspricht.

Das Verfahren prüft, ob sich die Anforderungen an das Zapfwellengetriebe ändern, stellt gemäß den vorangehenden Ausführungen die Steuerung um, oder bewertet, dass eine Änderung in einen anderen Leistungsmodus nicht notwendig ist. Unnötige Schaltvorgänge des Fahrzeuggetriebes und Beschleunigungsvorgänge des Antriebs werden vermieden, wodurch auch der Verschleiß des Fahrzeugs reduziert werden kann.

Weitere Ausführungen werden anhand der Figuren 1 bis 6 beschrieben. Dabei zeigen
- Figur 1:: die Anwendung eines Zapfwellengetriebes in einem landwirtschaftlichen Fahrzeug;
- Figur 2:: den Ablauf eines Verfahrens für ein Zapfwellengetriebe
- Figur 3:: eine Ausführung eines erfindungsgemäßen Zapfwellengetriebes;
- Figur 4:: eine weitere Ausführung eines erfindungsgemäßen Zapfwellengetriebes;
- Figur 5:: eine weitere Ausführung eines erfindungsgemäßen Zapfwellengetriebes;
- Figur 6:: eine weitere Ausführung eines erfindungsgemäßen Zapfwellengetriebes.

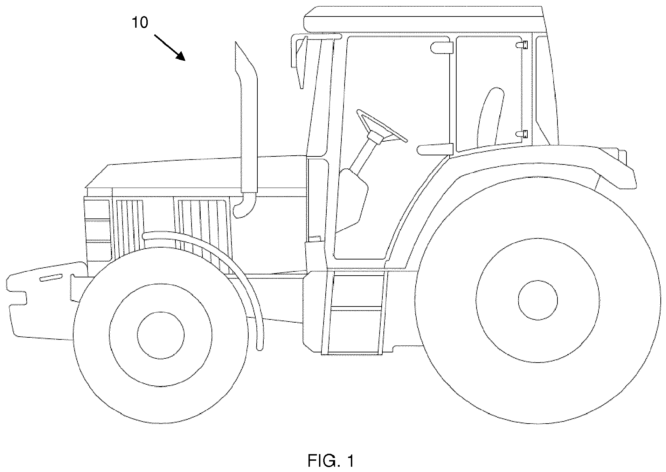

Die Erfindung kann in einem landwirtschaftlichen Nutzfahrzeug 10 in Fig. 1 verwendet werden, um eine Zapfwelle zur Versorgung von Arbeitsaggregaten mit Antriebsleistung zu ermögliche. An einem solchen Nutzfahrzeug ist die Zapfwelle üblicherweise vorne und hinten am Fahrzeug vorgesehen. Hierfür ist ein zusätzliches Zapfwellengetriebe notwendig, welches die Zapfwelle mit der Antriebsleistung versorgt und die Steuerung der Zapfwelle ermöglicht.

Üblich sind Zapfwellendrehzahlen von 540 und 1000 Umdrehungen pro Minute. Es ist weiterhin möglich, die Zapfwelle bei den genannten Drehzahlen in einem reduzierten Leistungsmodus zu betreiben. Die Zapfwelle wird dann mit einer geringeren Antriebsleitung versorgt. Dies führt zur Einsparung von Antriebsenergie.

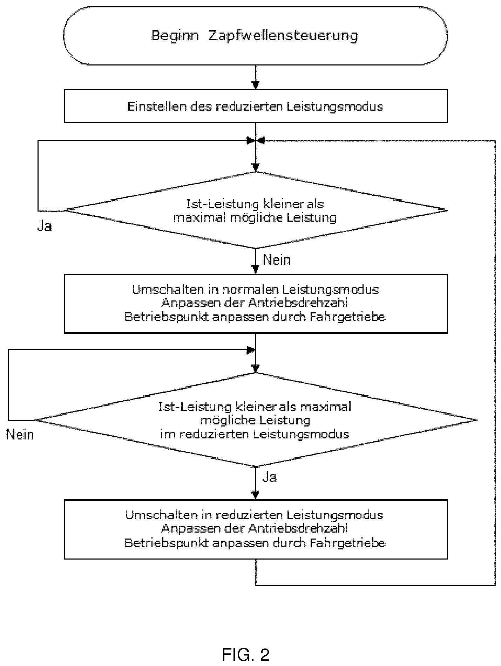

Fig. 2 zeigt den Ablauf einer erfindungsgemäßen Steuerung für ein Zapfwellengetriebe 20. Diese umfasst eine Fahrzeugsteuerung, die ein automatisiertes Fahrgetriebe steuert, den Fahrzeugantrieb und das Zapfwellengetriebe 20. Üblicherweise befindet sich die Zapfwelle wenn möglich in einem reduzierten Leistungsmodus.

Für einen bestimmten Fahrzustand mit einer gezielt gewählten Drehzahl der Zapfwelle bestimmt die Fahrzeugsteuerung ein entsprechendes Leistungsniveau des Antriebs. Die Belastung des Antriebes kann wechselnd sein und wird durch weitere äußere Faktoren, wie Steigung oder Zuglast, anliegende elektrische oder hydraulische Lasten bestimmt.

Die Fahrzeugsteuerung erfasst dabei auch den aktuellen Zustand des Fahrgetriebes und bestimmt einen aktuellen Betriebspunkt des Fahrzeugs. Daraus wird die aktuell maximal mögliche Leistung für den Antrieb ermittelt. Die momentan anliegende Antriebsleistung im reduzierten Leistungsmodus wird mit dem ermittelten Wert der maximal möglichen Antriebsleistung abgeglichen. Für den Fall, dass die anliegende Leistung den ermittelten Wert nicht überschreitet, erfolgt kein Eingriff durch die Fahrzeugsteuerung.

Bei einem Überschreiten des ermittelten Werts der maximal möglichen Leistung durch die aktuell anliegende Leistung im reduzierten Leistungsmodus erfolgt durch die Fahrzeugsteuerung ein Umschalten der Zapfwellensteuerung vom leistungsreduzierten Modus in einen normalen Betriebsmodus, der eine höhere Leistung an die Zapfwelle bereitstellt. Dieses Umschalten erfolgt durch gesteuerte Schaltvorgänge im Zapfwellengetriebe 20, wobei durch das Zapfwellengetriebe 20 nach der vorliegenden Erfindung ein Umschalten unter Last erfolgen kann.

Gleichzeitig erfolgt durch die Fahrzeugsteuerung eine Anhebung der Drehzahl des Fahrzeugantriebs, um entsprechenden Leistungszuwachs sicherzustellen und ein Anpassen der Fahrgetriebes durch einen entsprechenden Gangwechsel. Damit reagiert die Fahrzeugsteuerung autonom auf ein gestiegenes Leistungserfordernis des Antriebs, ohne dass die Bedienperson einen manuellen Abgleich der Zapfwellensteuerung, des Gashebels für den Fahrzeugantrieb und des Fahrgetriebes vornehmen muss.

Sollte sich die Zapfwellensteuerung im normalen Betriebsmodus befinden, wird durch die Fahrzeugsteuerung ermittelt, ob eine maximal mögliche Leistung im reduzierten Leistungsmodus durch die aktuell anliegende Leistung des Antriebs unterschritten wird. Ist die Bedingung erfüllt, wird durch die Fahrzeugsteuerung die Zapfwellensteuerung in den leistungsreduzierten Modus geschaltet und der geschilderte Ablauf läuft in umgekehrter Reihenfolge ab.

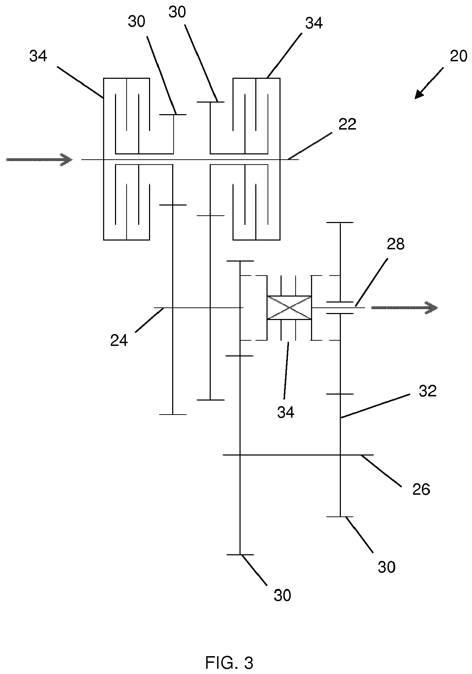

In Fig. 3 ist ein erfindungsgemäßes Zapfwellengetriebe 20 dargestellt. Das Zapfwellengetriebe 20 weist einer Eingangswelle 22 auf, eine erste Ausgangswelle 24, eine zweite Ausgangswelle 28 und eine Zwischenwelle 26. Auf der Eingangswelle 22 sind zwei Zahnräder 32 vorgesehen, die jeweils über ein Schaltelement 34 mit der Eingangswelle 22 in Verbindung stehen. Durch die Betätigung der jeweiligen Schaltelemente können die Zahnräder 32 drehfest mit der Eingangswelle 22 verbunden werden. Die Zahnräder 32 befinden sich im Eingriff mit zwei zugeordneten Zahnrädern 32 auf der ersten Ausgangswelle 24. Mit diesen bilden sie jeweils ein Zahnradpaar 30 mit dem bei entsprechender Stellung des Schaltelementes 34 Drehmoment und Drehzahl von der Eingangswelle 22 auf die erste Ausgangswelle 24 übertragen werden können. Die erste Ausgangswelle 24 weist drei Zahnräder 32 auf, von denen zwei zusammen mit den Zahnrädern 32 der Eingangswelle 22 zwei Zahnradpaare bilden. Das dritte Zahnrad 32 der erste Ausgangswelle 24ist mit einem Zahnrad 32 der Zwischenwelle 26 im Eingriff und bildet ein drittes Zahnradpaar 30. An der zweiten Ausgangswelle 28 ist ein weiteres Zahnrad 32 vorgesehen, das mit einem zweiten Zahnrad 32 der Zwischenwelle 26 im Eingriff ist. Zwischen dem dritten Zahnrad 32 der ersten Ausgangswelle 24 und dem Zahnrad 32 der zweiten Ausgangswelle 28 befindet sich ein weiteres Schaltelement 34, das derart schaltbar ist, dass entweder das Zahnrad 32 der ersten Ausgangswelle 24 mit der Welle verbunden wird oder das Zahnrad 32 der zweiten Ausgangswelle 28 mit der Welle verbunden wird.

Auf der Zwischenwelle 26 befinden sich zwei weitere Zahnräder 32, die jeweils mit dem dritten Zahnrad 32 der ersten Ausgangswelle 24 oder dem Zahnrad 32 der zweiten Ausgangswelle 28 ein drittes und viertes Zahnradpaar 30 bilden durch das Umschalten des Schaltelementes 34. Zwischen der ersten Ausgangswelle 24 und der zweiten Ausgangswelle 28 wird der Leistungspfad zur die Zapfwelle derart umgeschaltet, dass dieser von der ersten Eingangswelle 22 über die erste Ausgangswelle 24 entweder direkt über die zweite Ausgangswelle 28 oder über die Zwischenwelle 26 und die zweite Ausgangswelle 28 geleitet wird. Durch die Ausbildung ein oder mehrerer Schaltelemente 34 als einen lastschaltbares Schaltelement kann ein automatisiertes Umschalten im Bedarfsfall gesteuert durch die Fahrzeugsteuerung ermöglicht werden.

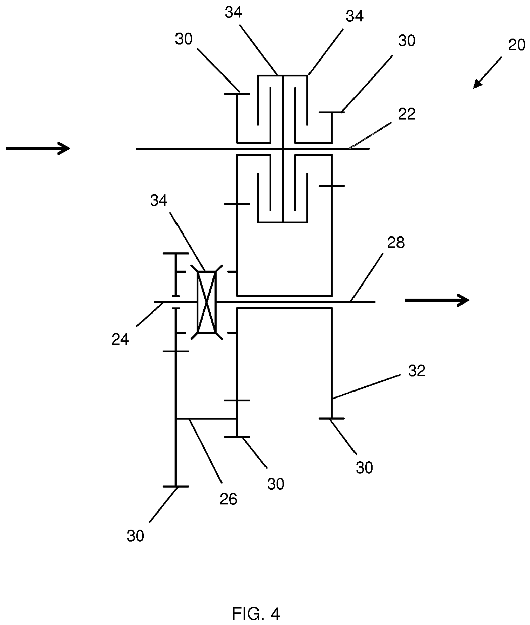

Gemäß der Darstellung der Figur 4 weist das Zapfwellengetriebe 20 eine Eingangswelle 22, eine erste Ausgangswelle 24, eine zweite Ausgangswelle 28, und eine Zwischenwelle 26 auf. Auf der Eingangswelle 22 sind zwei Zahnräder 32 vorgesehen, die jeweils mit einem Schaltelement 34 schaltbar ausgebildet sind. Die zwei Zahnräder 32 bilden jeweils komplementär mit einem Zahnrad 32 der ersten Ausgangswelle 24 ein Zahnradpaar 30. Auf der ersten Ausgangswelle 24 ist ein weiteres Zahnrad 32 vorgesehen, das mit einem Zahnrad 32 der Zwischenwelle 26 ein Zahnradpaar 30 bildet. Zwischen einem Zahnradpaar 30, das zwischen der Eingangswelle 22 und der ersten Ausgangswelle vorgesehen ist und zwischen dem Zahnradpaar 30, das zwischen der ersten Ausgangswelle 24 und der Zwischenwelle 26 ausgebildet ist, befindet sich ein Schaltelement 34. Durch das Schaltelement 34 kann wahlweise das eine oder das andere Zahnradpaar 30 mit der zweiten Ausgangswelle 28 verbunden werden. Durch die Ausbildung nach Figur 4 kann so wahlweise der Leistungspfad über eines der beiden Zahnräder 32 der Eingangswelle 22 auf die erste Ausgangswelle 24 direkt in die zweite Ausgangswelle 28 und zur Zapfwelle geleitet werden, oder unter entsprechender Schaltung des Schaltelementes über die Zwischenwelle 26 und die zweite Ausgangswelle 28 zur Zapfwelle. Hierdurch können vier unterschiedliche Übersetzungen oder vier unterschiedliche Leistungsstufen erreicht werden.

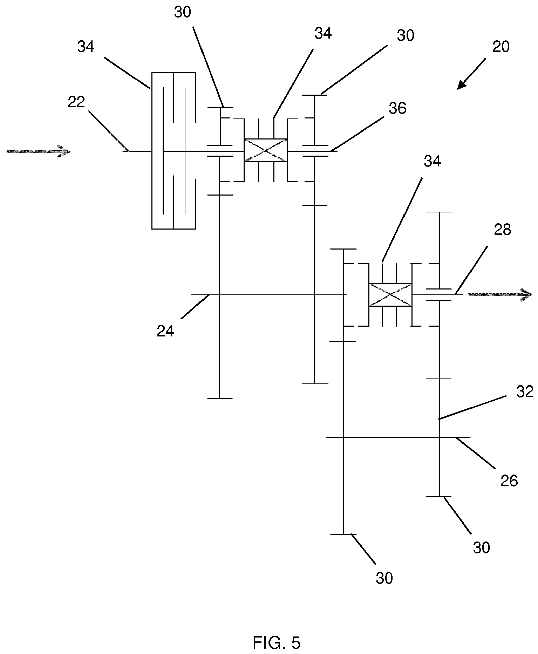

Ein Zapfgetriebe gemäß Figur 5 weist im Unterschied zu den bisherigen Ausführungsbeispielen zwei Eingangswellen auf. Diese teilen sich auf in eine erste Eingangswelle 22 und in eine zweite Eingangswelle 36. Zwischen der ersten und der zweiten Eingangswelle ist ein Schaltelement 34 vorgesehen.

Das Schaltelement 34 dient dazu, die Zapfwelle bei Bedarf vollständig abzuschalten. Die zweite Eingangswelle 36 verfügt über zwei Zahnräder 32, die beide durch ein Schaltelement 34 bedient werden. Die beiden Zahnräder 32 der zweiten Eingangswelle 36 bilden mit zwei Zahnrädern 32 auf der ersten Ausgangswelle 24 jeweils ein Zahnradpaar 30. Auf der ersten Ausgangswelle 24 ist ein drittes Zahnrad 32 vorgesehen, welches mit einem Zahnrad 32 auf der Zwischenwelle 26 im Eingriff ist und ein Zahnradpaar 30 bildet.

Ein weiteres Zahnrad 32 auf der Zwischenwelle 26 ist wiederum mit einem Zahnrad 32 auf der zweiten Ausgangswelle 28 im Eingriff und bildet ein viertes Zahnradpaar 30. Zwischen dem Zahnradpaar 30 der ersten Ausgangswelle 24 und der Zwischenwelle 26 und dem Zahnradpaar 30 der Zwischenwelle 26 und der zweiten Ausgangswelle 28 befindet sich ebenfalls ein Schaltelement 34, so dass wahlweise der Leistungspfad von der ersten Ausgangswelle 24 über das Zahnradpaar 30 zur Zwischenwelle 26 und über das weitere Zahnradpaar 30 zur zweiten Ausgangswelle 28 geleitet werden kann, oder von der ersten Ausgangswelle 24 direkt in die zweite Ausgangswelle 28 zur Zapfwelle. Hierdurch können ebenfalls vier Gänge oder Leistungsstufen für die Zapfwelle bereitgestellt werden.

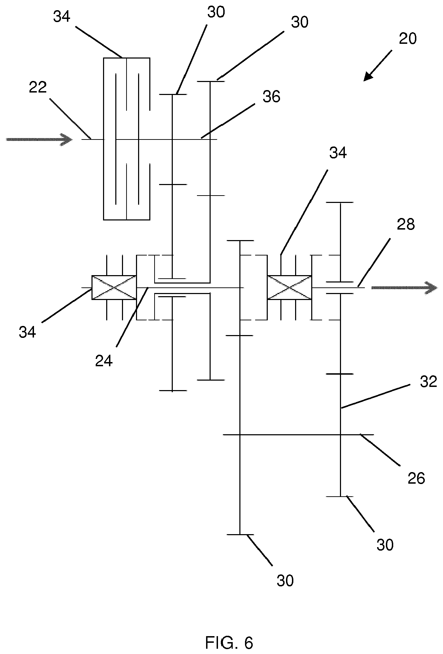

Ein weiteres Ausführungsbeispiel gemäß Figur 6 unterscheidet sich von der Ausführung gemäß Figur 5 dadurch, dass ein Schaltelement 34 von der zweiten Eingangswelle 36 entfernt und stattdessen nun an der ersten Ausgangswelle 24 vorgesehen ist, um zwischen zwei Zahnradpaaren 30 zwischen der zweiten Eingangswelle 36 und der ersten Ausgangswelle 24 zu schalten. Der weitere Aufbau entspricht dem Aufbau aus dem Ausführungsbeispiel nach Figur 5, so dass ebenfalls vier unterschiedliche Gänge oder Leistungsstufen für die Zapfwelle bereitgestellt werden können.

Durch die vorliegende Erfindung kann eine automatisierte Umschaltung im Zapfwellenbetrieb vorgenommen werden, ohne dass die Bedienperson manuelle Umschaltvorgänge durchführen muss. Somit wird die Bedienperson in ihrer Arbeit entlastet und das vorgeschlagene Verfahren führt zu einer konstanten Auslastung des Fahrzeugs und des Fahrzeugantriebes bei gleichzeitiger Kraftstoffersparnis.

Sämtliche Schaltelemente 34 können sowohl als lastfrei schaltbares Schaltelement oder als lastschaltbares Schaltelement ausgeführt sein. Bei Schaltelementen die unter Last schaltbar sind, ergibt sich weiterhin der Vorteil, dass ohne eine Zugkraftunterbrechung zwischen zwei verschiedenen Modi für den Zapfwellenbetrieb umgeschaltet werden kann.

Der Vorteil bei einer Verwendung eines lastfrei schaltbaren Schaltelementes ist der kleinere Bauraum, der hierfür verwendet werden muss.

## Patentansprüche

1. Zapfwellengetriebe (20), aufweisend:
eine Zapfwellensteuerung,
eine Eingangswelle (22),
eine erste Ausgangswelle (24),
eine parallel angeordnete Zwischenwelle (26),
eine zweite Ausgangswelle (28), die koaxial zur ersten Ausgangswelle (24) angeordnet ist,
vier Zahnradpaare (30), die derart angeordnet sind, dass die Eingangswelle (22) zwei Zahnräder, die erste Ausgangswelle (24) drei Zahnräder, die Zwischenwelle (26) zwei Zahnräder und die zweite Ausgangswelle (28) ein Zahnrad aufweist, so dass zwei Zahnradpaare (30) zwischen der Eingangswelle (22) und der ersten Ausgangswelle (24), ein Zahnradpaar (30) zwischen der ersten Ausgangswelle (24) und der Zwischenwelle (26) und ein Zahnradpaar (30) zwischen der Zwischenwelle (26) und der zweiten Ausgangswelle (28) im Eingriff sind, wobei wenigstens ein Zahnrad (32) je Zahnradpaar (30) schaltbar ist.

2. Zapfwellengetriebe (20) nach Anspruch 1, **dadurch gekennzeichnet, dass** die Eingangswelle (22) wenigstens ein Schaltelement (34) aufweist, und die erste Ausgangswelle (24) höchstens zwei Schaltelemente (34) aufweist, mit denen die Zahnräder (32) schaltbar sind.

3. Zapfwellengetriebe (20) nach Anspruch 1, **dadurch gekennzeichnet, dass** durch das wenigstens eine Schaltelement (34) auf der Eingangswelle (22) die Eingangswelle (22) mit der ersten Ausgangswelle (24) verbindbar ist, und durch die höchstens zwei Schaltelemente (34) der ersten Ausgangswelle (24) die erste Ausgangswelle (24) mit der Eingangswelle (22) und mit der zweiten Ausgangswelle (28) verbindbar ist, oder die Eingangswelle (22) mit der ersten Ausgangswelle (24), der Zwischenwelle (26) und der zweiten Ausgangswelle (28) verbindbar ist.

4. Zapfwellengetriebe (20), aufweisend:
eine Zapfwellensteuerung,
eine erste Eingangswelle (22),
eine zweite Eingangswelle (36),
eine erste Ausgangswelle (24),
eine parallel angeordnete Zwischenwelle (26),
eine zweite Ausgangswelle (28), die koaxial zur ersten Ausgangswelle (24) angeordnet ist,
vier Zahnradpaare (30), die derart angeordnet sind, dass die zweite Eingangswelle (36) zwei Zahnräder (32), die erste Ausgangswelle (24) drei Zahnräder (32), die Zwischenwelle (26) zwei Zahnräder (32) und die zweite Ausgangswelle (28) ein Zahnrad (32) aufweist, so dass zwei Zahnradpaare (30) zwischen der zweiten Eingangswelle (36) und der ersten Ausgangswelle (24), ein Zahnradpaar (30) zwischen der ersten Ausgangswelle (24) und der Zwischenwelle (26) und ein Zahnradpaar (30) zwischen der Zwischenwelle (26) und der zweiten Ausgangswelle (28) im Eingriff sind, wobei wenigstens ein Zahnrad (32) je Zahnradpaar (30) schaltbar ist.

5. Zapfwellengetriebe (20) nach Anspruch 4, **dadurch gekennzeichnet, dass** die zweite Eingangswelle (36) wenigstens ein Schaltelement (34) aufweist, und die erste Ausgangswelle (24) höchstens zwei Schaltelemente (34) aufweist, mit denen die Zahnräder (32) schaltbar sind.

6. Zapfwellengetriebe (20) nach Anspruch 4 oder 5, **dadurch gekennzeichnet, dass** durch das wenigstens eine Schaltelement (34) auf der zweiten Eingangswelle (36) die zweite Eingangswelle (36) mit der ersten Ausgangswelle (24) verbindbar ist, und durch die höchstens zwei Schaltelemente (34) der ersten Ausgangswelle (24) die erste Ausgangswelle (24) mit der zweiten Eingangswelle (36) und mit der zweiten Ausgangswelle (28) verbindbar ist, oder die zweite Eingangswelle (36) mit der ersten Ausgangswelle (24), der Zwischenwelle (26) und der zweiten Ausgangswelle (28) verbindbar ist.

7. Zapfwellengetriebe (20) nach einem der vorangehenden Ansprüche, **dadurch gekennzeichnet, dass** die Schaltelemente (34) unter Last schaltbar oder lastfrei schaltbar ausgeführt sind.

8. Zapfwellengetriebe (20) nach einem der vorangehenden Ansprüche, **dadurch gekennzeichnet, dass** wenigstens eines der Schaltelemente (34) auf der zweiten Ausgangswelle (28) eine Neutralstellung aufweist.

9. Verfahren zum Schalten eines Zapfwellengetriebes (20), aufweisend:
ein Zapfwellengetriebe (20) nach einem der vorangehenden Ansprüche,
eine Fahrzeugsteuerung zur Steuerung eines automatisierten Fahrgetriebes, eines Fahrzeugantriebs und eines Zapfwellengetriebes (20),
wobei der Fahrzeugsteuerung eine momentane Antriebsleistung vorliegt, die mit einer zu einem Zapfwellengetriebegang zum Betrieb mit reduzierter Antriebsdrehzahl gehörenden maximalen Antriebsleistung verglichen wird, und bei einem Überschreiten der maximalen Antriebsleistung einen Gangwechsel des Zapfwellengetriebes (20) und eine Übersetzungsanpassung des Fahrgetriebes dahingehend vornimmt, dass die Antriebsdrehzahl zu einem Betriebspunkt höherer Leistungsverfügbarkeit verstellt wird.

10. Verfahren zum Schalten eines Zapfwellengetriebes (20) nach Anspruch 9, **dadurch gekennzeichnet, dass** der Fahrzeugsteuerung eine momentane Antriebsleistung vorliegt, die mit einer zu einem Zapfwellengetriebegang zum Betrieb mit reduzierter Antriebsdrehzahl gehörenden maximalen Antriebsleistung verglichen wird, und bei einem Unterschreiten der maximalen Antriebsleistung einen Gangwechsel des Zapfwellengetriebes (20) und eine Übersetzungsanpassung des Fahrgetriebes dahingehend vornimmt, dass die Antriebsdrehzahl zu einem Betriebspunkt niedriger Leistungsverfügbarkeit verstellt wird.

11. Verfahren zum Schalten eines Zapfwellengetriebes (20) nach Anspruch 9 und 10, **dadurch gekennzeichnet, dass** die Fahrzeugsteuerung die Betriebskonfiguration bestehend aus Fahrgetriebeübersetzung, Zapfwellengetriebegang und Antriebsdrehzahl bestehen lässt, wenn die neu ermittelte Betriebskonfiguration der aktuellen entspricht.
